# EUROPEAN PATENT SPECIFICATION

(11) **EP 1 339 496 B1**
(45) Date of publication and mention of the grant of the patent: **28.02.2007**
(21) Application number: 01990651.0
(22) Date of filing: 06.11.2001
(51) Int. Cl.: B01L 3/02, B01L 3/00, G01N 15/06, G01N 33/00, G01N 33/48, G01N 21/01, G01N 21/17, G01N 21/75, G01N 21/00, G01N 31/00, G01N 35/08, H01L 21/265

(54) **SAMPLE DELIVERY SYSTEM WITH LAMINAR MIXING FOR MICROVOLUME BIOSENSING**
PROBENZUFÜHRSYSTEM MIT LAMINARMISCHUNG ZUR BIODETEKTION VON MIKROVOLUMEN
SYSTEME D'APPORT D'ECHANTILLON COMPORTANT UN MELANGE LAMINAIRE POUR LA BIODETECTION DE MICROVOLUMES

(30) Priority: 06.11.2000 US 245555 P
(43) Date of publication of application: 03.09.2003
(73) Proprietor: The Government of the United States of America, as represented by the Secretary of Health and Human Services, Bethesda, MD 20852-3804 (US)
(72) Inventor: SCHUCK, Peter, Bethesda, MD 20814 (US)
(74) Representative: Price, Nigel John King
(86) International application number: PCT/US2001/042980
(87) International publication number: WO 2002/037079

(56) References cited:
- WO-A-01/28670
- US-A- 5 134 079
- US-A- 5 268 147
- US-A- 5 587 128
- US-A- 5 726 404
- US-A- 5 972 710
- US-A- 6 008 893
- US-A- 6 033 880
- US-A- 6 065 864
- US-A- 6 068 752
- US-A- 6 130 098
- US-A- 6 153 073
- US-A1- 2002 025 279
- US-B1- 6 264 892
- US-B1- 6 274 089
- US-B1- 6 342 142
- US-B1- 6 375 817
- US-B1- 6 379 974

## Description

### BACKGROUND OF THE INVENTION

### Field of the Invention

The invention relates to an apparatus and method used for mixing and sampling small volumes of liquids useful in microanalysis. The invention is particularly applicable to biosensing techniques.

### Background

Since the introduction of optical biosensors as research tools for the characterization of reversible interactions of biological macromolecules (B. Liedberg, I. Lundström, E. Stenberg (1993) *Sensors and Actuators* B, 11:63-72; B. Johnsson, S. Löfås, G. Lindquist (1991) *Anal. Biochem.* 198:268-277; and others, reviewed in P.B. Garland (1996) *Q. Rev. Biophys.* 29:91-117 and P. Schuck (1997) *Ann. Rev. Biophys. Biomol. Struct.* 26:541-566), this method has matured into a tool that is routinely and widely used in many fields where molecular recognition events are of interest, such as drug discovery (M.M. Morelock, R.H. Ingraham, R. Betageri, S. Jakes (1995) *J. Med. Chem.* 38:1309-1318; see e.g. a general review by H.A. Fishman, D.R. Greenwald, R.N. Zare (1998) *Ann. Rev. Biophys. BionzoL Struct.* 27:165-198), antibody engineering (K. Alfthan (1998) *Biosens. Bioelectron.* 13:653-663; A.C. Malmborg, C.A.K. Borrebaeck (1995) *J. Immunol. Methods* 183:7-13), immunology (see the special issue of *J*. *Immunol.* Methods on biosensor methods in immunology, Vol. 183 (1)), virology (see the review M.H.V. Van Regenmortel, D. Altschuh, J. Chatellier (1997) *Immunological Investigations* 26:67-82), receptor-ligand interactions (e.g. S.F. Liparoto, T.L. Ciardelly (1999) *J. Mol. Recognition* 12:316-321), and others (see the reviews cited above, and D.G. Myszka (1999) *J. Mol. Recognit.* 12:390-408). The measurement is based on changes in the optical properties of a sensor surface due to binding of a mobile reaction partner (the analyte) to surface-immobilized reaction partner on the sensor surface.

Biosensing monitors the reaction of analyte molecules in a sample with a binding surface in a sample chamber. The sensor also includes a detector for measuring molecular binding. In the absence of mixing, analyte molecules in the vicinity of the sensor surface can be rapidly depleted. Because the macroscopic sample dimensions are usually large compared to the diffusion distances on the time-scale of the reaction, the rate of molecular diffusion through the sample can be slow, and optimal sensitivity compromised in the absence of mixing or some other form of increasing the mass transfer rate. This may be particularly true if the measured quantity is not the concentration of analyte molecules, but their binding rate, as is the case in some commercial affinity biosensors. Several different techniques for sample handling in optical biosensors have been implemented in different commercial instruments. The primary designs used in commercial instruments are cuvettes and continuous flow microfluidics.

Continuous flow systems, such as, for example, the Biacore SPR sensor, typically incorporate an HPLC-like injection loop having a volume of from about 25 µl to about 200 µl. Such systems suffer from a requirement for continuous sample consumption during the observation of the binding process, but exhibit superior results with respect to stability and surface transport. Due to the limited volume of the injection loop, these systems provide only a limited contact time of the sample with the surface, which can limit the sensitivity and is frequently too short for many quantitative studies.

In the operation of continuous flow systems, microchannels deliver the sample to a sample chamber with a constant unidirectional flow. The sample exits the microchannel and is disposed of through a drain. The sample is constantly replenished in the sample chamber to avoid the generation of a depletion zone (i.e. a zone where the concentration of analyte molecules is reduced locally) in the vicinity of the sensor surface. Because of the laws governing surface layers in laminar flow, the analyte in the depletion zone is replenished more efficiently at higher flow rates. Thus, a relatively large volume of sample can be required to allow for sufficient reaction time, adequate mass transfer (i.e. the kinetic response allows the observation of the intrinsic bimolecular reaction, unconstrained by the mass transfer to the surface) and optimal observation time. Typically, from about 30 µl to about 200 µl of sample are required, and small volumes may allow only very short reaction times with a concomitant loss in observation time.

The cuvette design, on the other hand, can be problematic with respect to baseline stability and/or mass transfer rate, i.e. molecular migration to the detector surface. In the most commonly used cuvette instruments, the Affinity Sensors resonant mirror, a stirrer is inserted in the cuvette to reduce the depletion zone over the sensor surface. However, large sample volumes of 100-200 µl are required.

Using these conventional systems, a compromise has to be found between sample volume, contact time of the sample with the detector surface, and mass transfer rate. This commonly restricts the ability to study both the thermodynamics and binding kinetics of the biomolecules.

The reduction of sample volume without loss of sensitivity in a microanalytical device has been addressed in several ways. For example, U.S. Patent Nos. 5,628,961 and related 5,447,440 to Davies et al. disclose an apparatus used to detect changes in the viscosity of a fluid medium by monitoring changes in the fluid oscillation frequency or amplitude. The apparatus disclosed in these patents utilize a back and forth motion of liquid across a sensor to increase sample exposure. According to the patents, the apparatus may be used for immunoassay purposes similar to biosensors. However, the patents describe a method and apparatus useful only for immunoassays that measure changes in viscosity, which is quite different from measuring molecular affinity, binding properties and the like.

U.S. Patent No. 6,043,080 to Lipshutz et al. discloses a microanalytical device which may have mixing means incorporated therein. The apparatus is primarily applicable to PCR devices, and the patent mentions the possibility of using a mixing element. The patent indicates that mixing may be accomplished by pumping the sample into and out of a chambers using a back and forth motion before being output for analysis. This patent also discloses other possible mixing means, such as acoustic mixing and the use of mixing elements which create turbulence in the sample. The possibility of constant analysis or the use of laminar mixing to enhance reaction at an analytical surface is not mentioned. Mixing by pumping is described in conjunction with obtaining a uniform reaction medium, for example, for the PCR reaction, but is not a part of the analytical process. The patent describes the use of other means, for example acoustic mixing and use of ferromagnetic elements, in some cases when constant mixing within a single reaction chamber is desired.

U.S. Patent No. 6,065,864 to Evans et al. discloses a microelectromechanical device which mixes fluids using laminar flow principles. This patent defines mixing as "combining two fluids, increasing the uniformity of a single fluid or decreasing the spatial or temporal gradients of fluid properties". The patent describes mixing due to laminar flow within a mixing chamber and uses a set of bubble valves to establish the flow in the chamber. After mixing, fluid is unloaded from the chamber in order to be analyzed or further treated. Thus, this patent discloses a device that achieves laminar mixing in a mixing chamber prior to being sent to a sensor and does not perform detection until after mixing is complete. This is not useful where constant mixing is required during the course of analysis. Furthermore, the mixing is primarily directed to changing the bulk properties of the fluids rather than causing molecular mixing to increase contact with a sensor surface.

U.S. Patent No. 5,885,527 to Buechler discloses a diagnostic device which may be useful for small quantities of fluid. The device disclosed in this patent utilizes only unidirectional flow of the analyte over a ridged analytical surface leading to a waste reservoir. The sample reservoir is typically larger than the reaction chamber and analytical section of the device. The device realizes an optimization of the capture of reagents in the ridged analytical diagnostic zone by increasing surface area. However, the patent requires unidirectional flow and that excess sample remain in the sample addition reservoir and thus a relatively large volume of sample would be required. Further, an increased surface area does not alone address the problem of the generation of a depletion zone at the sensor surface and the time-course of binding remains limited.

Other patents achieve fluid mixing in various ways, usually through the introduction of turbulence. For example, U.S. Patent No. 5,731,212 to Gavin et al. achieves mixing through the use of protrusions within the microfluid channels to create turbulent flow. Similarly, U.S. Patent No. 5,646,039 to Northup and White discloses the use a Lamb-Wave Transducer as an agitator, mixer and sonochemical inducer.

Another mixing device for small fluid volumes is disclosed in U.S. Patent No. 5,904,424 to Schwesinger and Frank. This device comprises a single microchannel that is bifurcated into two microchannels. Mixing is achieved by the interaction of the flow where the two microchannels come together and by a change in the three dimensional direction of flow, i.e., a horizontal flow is redirected into a vertical flow.

In drug discovery and biomedical research, the use of biosensors centers on measuring molecular properties of the analyte molecules, rather than their concentration. Among the most important properties studied are kinetic and equilibrium binding constants for the interaction of the analyte with a surface-immobilized target site. Problems frequently encountered in the application of optical biosensors include the deviation from single-exponential binding progress, which the theory predicts for simple bimolecular interactions. This is a difficult situation, because in addition to possible complex biomolecular interaction kinetics, which can be very difficult to unravel (R.W. Glaser, G. Hausdorf (1996) *J. Immunol. Methods* 189:1-14), a number of possible sensor-related artifacts have been shown to be possible causes for such multiphasic surface binding progress (P. Schuck (1997) *Ann. Rev. Biophys. Biomol. Struct.* 26:541-566). One possible reason can be an insufficient mass transfer rate of the analyte to the surface sites, in particular when using high densities of surface sites. One popular technique to overcome this problem in the flow system is the use of an increased flow rate. However, as the molecular mass transfer rate only grows with the cube root of the flow rate, high sample consumption frequently prevents an effective implementation of this approach, unless very short contact times and the concurrent loss of information is tolerable.

Another possible experimental design that not only eliminates possible mass transport problems, but all ambiguity due to the interpretation of the binding kinetics, is to restrict the experiment to the characterization of the thermodynamic aspects of the interaction, by measurement of the binding isotherm at equilibrium (or steady state). Even more independence of potential sensor-related artifacts can be gained by interpretation of the equilibrium competition isotherm, from which the thermodynamics of the solution interaction can be measured. In general, a competition isotherm requires only that a reproducible calibration curve as a function of analyte concentration generated through some more or less arbitrary (but quantitative) feature of the sensor response, and a second mobile reactant that is introduced to compete with the immobilized sites for the interactions of the analyte that does not interact itself with the surface. Although such experimental design can be appealing from a theoretical aspect, it may be impractical to implement, either because significantly higher sample consumption is required in the competition approach, or extended contact times required to reach a steady-state signal are not obtainable.

From the considerations described above, it is clear that sample volume, contact time, and flow rate are correlated parameters to be considered when conducting biosensor experiments. In particular, the maximal sample volume available, as defined either by the size of the injection loop or by the availability of the material, can frequently be a limiting factor in the experimental design. Earlier attempts to circumvent these problems have included equilibrium titration by recirculation of the sample in a modified Biacore X instrument (P. Schuck, D.B. Millar, A.A. Kortt (1998) *Anal. Biochem.* 265:79-91); however, this still requires analyte volumes in the order of 200 µl, which is similar to cuvette based instruments. The absence of an adequate and practical solution to the problems described above is addressed by the present invention.

### SUMMARY OF THE INVENTION

According to a first aspect of the present invention there is provided a device for molecular sensing comprising:
a sample chamber;
a first microchannel in fluid communication with the sample chamber;
a second microchannel in fluid communication with the sample chamber; and
at least one pump to facilitate pumping of a fluid sample from the first microchannel through the sample chamber and into the second microchannel and from the second microchannel through the sample chamber and into the first microchannel; wherein
at least one of the first microchannel, sample chamber and second microchannel having a width that causes molecular mixing of the sample by laminar flow within the fluid sample as the fluid sample moves through the at least one microchannel and/or sample chamber; and
the sample chamber comprising a microanalytical detector.

According to a second aspect of the present invention there is provided a method for molecular sensing comprising:
pumping a fluid sample to be analyzed through a first microchannel and a sample chamber into a second microchannel, said sample chamber comprising a microanalytical detector,
reversing the flow of said fluid sample such that the fluid sample flows from the second microchannel into the sample chamber and then into the first microchannel, and wherein
the sample chamber is continuously filled with a portion of the fluid sample,
at least a portion of both the first microchannel and the second microchannel contains continuously a portion of the fluid sample, and
at least one of the first microchannel, sample chamber and second microchannel has a width that causes molecular mixing by laminar flow within the fluid sample as the fluid sample moves through the at least one microchannel and/or sample chamber.

The present invention succeeds where previous efforts have failed by allowing microanalysis of very small sample volumes with efficient molecular mixing.

The present invention differs from conventional systems and methods in modifications which were not previously known or suggested by providing a biosensor sample delivery system that can utilize small volume of sample with sufficient molecular mixing to provide high sensitivity. Molecular mixing by oscillating laminar flow has not been previously incorporated into a biosensor device.

The present invention satisfies a long felt need for a highly sensitive microanalytical device that requires only very small sample volumes.

The present invention further differs from conventional systems and methods by using constant laminar mixing to facilitate molecular mixing in biosensors and other microanalytical devices.

An apparatus comprises at least two microchannels in fluid communication with a sample chamber containing a microanalytical device such as a biosensor. A sample plug with a volume on the order of about 2 µl to about 15 µl is positioned in the sample chamber and spans the surrounding microchannels. Efficient laminar mixing can be accomplished by applying an oscillatory back and forth flow pattern, which minimizes the formation of a depletion zone of analyte across the detector surface. At least one of the microchannels or the sample chamber is sufficiently small to achieve laminar mixing from the velocity profile of the flow and, in combination with diffusion in the direction perpendicular to the flow, can generate molecular mixing and replenishment of analyte in the depletion zone. The sample chamber is constantly filled with fluid.

The present invention can give responses equivalent to, within an acceptable margin, responses obtained from traditional application of a continuous unidirectional flow with high sample volume and high flow rate. In addition, several such small volume sample plugs can be manipulated and fully recovered in a serial fashion using the present invention. Use of multiple sample plugs can allow sequential study of the surface binding signal at different sample concentrations, for example. As a consequence, by using this invention, biosensor experiments can be conducted at significantly lower sample volumes for the analyte and, if applied during the immobilization process, lower concentrations of molecules to be immobilized at the sensor surface as well. In addition, the same sample can be subjected to several sensor surfaces connected by microchannels, without the usual restrictions in the surface contact time or in the mass transfer rate imposed by continuous unidirectional flow. This can translate to enhanced detection limits for slow reactions, and can eliminate practical limitations in the measurement of surface binding kinetics and thermodynamics for the characterization of bimolecular interactions.

The principle of the invention is to increase the mass transfer rate by laminar flow within the liquid sample during the constant oscillating motion through the microchannels. There is only a small displacement to sample and no net change in position, thus allowing for very small sample volumes. Because of the small scale of the apparatus, the flow of liquid through the microchannels can cause high (shear) velocity gradients of the liquid in the microchannels, which can substantially enhance the diffusional flow of the molecules to constantly mix the liquid. Thus, a small volume of sample can be used and repeatedly run across the sensing surface in the sample chamber without the need for constant replenishment of sample required in conventional unidirectional flow systems. Thus, according to the present invention, sample volumes as low as about 2 µl to 15 µl can be used with substantially longer effective reaction times resulting in increased sensitivity.

The device of the present invention is a device for molecular sensing according to claim 1 and includes a sample chamber containing a sensing device a first and second microchannel fluidly connected to the sample chamber and at least one pump for pumping a fluid sample back and forth from the first microchannel through the sample chamber to the second microchannel. At least one of the microchannels or the sample chamber has a width that causes molecular mixing of the sample by laminar flow as the sample is pumped back and forth. The microchannels may have a width of, for example, from about 10 µm to about 1 mm or from about 50 µm to about 500 µm. The sample chamber may have a volume of, for example, about 1 nl to about 10 µl or from about 10 nl to about 100 nl.

The method of claim 11 can be used to assess interactions between molecules in a solution with molecules immobilized on a surface or with the surface itself.

The sample chamber includes a microanalytical detector, for example a biosensor or a waveguide biosensor. The pump can be at least one oscillating pump such as, for example, a syringe pump. In an examplary embodiment of the present invention, the microanalytical detector can be capable of assessing binding rate of reactions between molecules selected from pairs of proteins, antibody and antigens, proteins and carbohydrates, proteins and peptides, proteins and nucleic acids, pairs of nucleic acids, and molecules and a surface. In other exemplary embodiments, the microanalytical detector can be capable of assessing equilibrium constants of reactions between molecules selected from pairs of proteins, antibody and antigens, proteins and carbohydrates, proteins and peptides, proteins and nucleic acids, and pairs of nucleic acids, and molecules and a surface. In still further exemplary embodiments, the microanalytical detector can be capable of assessing conformational changes of molecules, for example conformational changes of biomolecules. Further examples of microanalytical detectors include those capable of assessing equilibrium constants of bimolecular reactions between a pair of interacting or chemically reacting molecules and those capable of assessing enzyme activity.

In another aspect, the present invention is a method for molecular sensing according to claim 11 that includes pumping a fluid sample to be analyzed through a first microchannel and a sample chamber into a second microchannel, where the sample chamber contains a microanalytical detector. Flow of the sample fluid is reversed so that the fluid sample flows from the second microchannel into the sample chamber and back into the first microchannel. The sample chamber and at least a portion of both the first microchannel and the second microchannel contains continuously at least a portion of the sample fluid. At least one of the first and second microchannels or the sample chamber has a width that causes molecular mixing by laminar flow within the fluid sample as the fluid sample moves. Suitable microanalytical detectors include biosensors, for example a waveguide biosensor. The fluid sample can have a volume of less than about 20 µl, for example, from about 3 µl to about 8 µl. The sample can be recovered after sensing or data collectio is complete.

In an exemplary embodiment the fluid sample can be replaced with a buffer and the signal from the detector monitored and recorded. In exemplary embodiments, the method may be used to assess binding rates for reactions between molecules such as, for example, pairs of proteins, antibody and antigens, proteins and carbohydrates, proteins and peptides, proteins and nucleic acids, pairs of nucleic acids and molecules and a surface. In other exemplary embodiments, the method can be utilized to analyze equilibrium constants of reactions between molecules such as pairs of proteins, antibody and antigens, proteins and carbohydrates, proteins and peptides, proteins and nucleic acids, pairs of nucleic acids and molecules with a surface. In still further exemplary embodiments, the method can be used to assess equilibrium constants of reactions between interacting or chemically reacting molecules such as, for example, to assess enzyme activities or conformational changes in molecules, for example, biomolecules.

Further features and advantages of the present invention will become apparent from a consideration of the description, drawings, and non-limiting examples.

### BRIEF DESCRIPTION OF THE DRAWINGS

The invention is better understood by reading the following detailed description with reference to the accompanying figures, in which like reference numerals refer to like elements throughout, and in which:
FIG. 1 is a schematic diagram of a conventional sampling system for biosensing;
FIG. 2 is a schematic diagram of a conventional biosensing sampling device employing sample circulation;
FIG. 3A is a schematic diagram of an exemplary embodiment of the sampling device according to the invention; FIG. 3B is an alternative configuration of an air bubble that may be used in some embodiments of the present invention;
FIG. 4A and FIG. 4B show schematically the operation of an exemplary embodiment of the present invention;
FIG. 5 is a schematic diagram of the laminar flow occurring in the device of the present invention;
FIG. 6 is a schematic diagram of an exemplary embodiment of the present invention having multiple samples;
FIG. 7 is a schematic diagram of one exemplary embodiment of the present invention having multiple sample chambers;
FIG. 8A, FIG. 8B and FIG. 8C are graphs of the signal obtained from samples of 2 µl and 5 µl obtained in the absence of laminar mixing;
FIG. 9A is a graph of the signal obtained from a 5 µl sample in the presence of laminar mixing. FIG. 9B is a graph comparing the signals obtained from a 5 µl sample in the presence and absence of mixing;
**FIG.** 10 is a comparison of the binding signal obtained from a 5 µl sample with mixing according to the present invention, a 5 µl sample injected conventionally with unidirectional flow and a 50 µl sample injected conventionally with unidirectional flow;
FIG. 11 is a graph obtained from the use of the invention for measuring molecular rate and equilibrium constants; and
FIG. 12 is a biosensor trace obtained when using the invention for the capture and recovery of analyte molecules.

### DETAILED DESCRIPTION OF THE INVENTION

In describing preferred embodiments of the present invention, specific terminology is employed for the sake of clarity. However, the invention is not intended to be limited to the specific terminology so selected. All references cited herein are incorporated by reference in their entirety as if each had been individually incorporated.

The term "a" is intended to mean at least one unless the context indicates otherwise.

"Biomolecules" refers to molecules typically found in biological systems. Examples of biomolecules include, for example: proteins, enzymes, antibodies, nucleic acids (including DNA and RNA), carbohydrates and peptides and nucleotides.

"Bulk properties" refers to properties of a fluid without consideration of molecular dynamics within the fluid. Examples of bulk properties include, for example, viscosity, flow rate, absorbance, refractive index, and density.

"Molecular mixing" refers to mixing that makes the fluid properties and local concentrations of solutes uniform on a spatial scale of micrometers and below. As used herein, molecular mixing refers to the movement of molecules through a liquid at a rate greater than the rate of diffusion alone. In general, molecular mixing may combine the effects of convection, diffusion, turbulence and laminar flow. The present invention, as described more fully below, utilizes primarily laminar flow to achieve molecular mixing.

"Microanalysis" and "microanalytical devices" refer to the analysis of samples for properties, components for analysis of samples at the molecular level and devices for performing such analyses. Devices may include a sensor or sensor surface and a detection mechanism. Microanalysis includes, for example, the measurement of binding properties of molecules in solution with enzymes, receptors, surfaces, antigens or drug targets, rate constants of molecular binding reactions and inhibition constants. Microanalytical devices include, for example, biosensors, devices for measuring fluorescence, some electrophoresis apparatuses, quartz crystal microbalances, etc.

"Contact with a surface" refers to an interaction between molecules within a sample and a surface wherein the approach of the molecule to the surface is sufficient to allow interaction between the molecule and the surface.

"Microfluidics" refers to small fluid transfer and sample holding tubes and channels. Microfluidics include, for example, microchannels, sample chambers, detectors, pumps and tubing.

"Mass transfer rate" refers to the rate of transport of molecules from the fluid phase through a liquid surface layer to a sensor surface. Mass transfer can be caused by a combination of convection and diffusion, and may be enhanced by "molecular mixing".

"Sample chamber" refers to the area of a sensing device where sensing actually occurs. The sample chamber of a microanalytical device includes a microanalytical detector such as a biosensor or other surface.

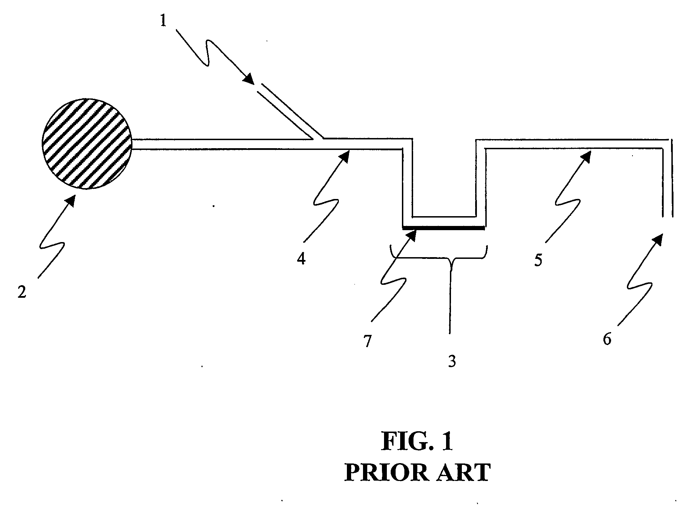

FIG. 1 is a schematic diagram of a conventional sampling system for biosensing. Prior to injection of sample, the entire system is filled with a buffer solution. The sample is injected through a sample inlet 1 into a first microchannel 4. The sample goes through a sample chamber 3 which includes a microanalytical device 7 such as a biosensor surface. A pump 2 continually pumps fluid through the first microchannel 4 past the sample chamber 3 into a second microchannel 5 and out a drain 6. The sample is injected into the sample inlet 1 through a sample loop (not shown) so that the sample flows through the first microchannel 4 and into the sample chamber 3. The signal may be extended and enhanced using this system by increasing the volume of sample injected into the system so that more sample comes into contact with the microanalytical detector, allowing for an increased observation time of the molecular surface binding reaction. An increased volume requires consumption of more sample.

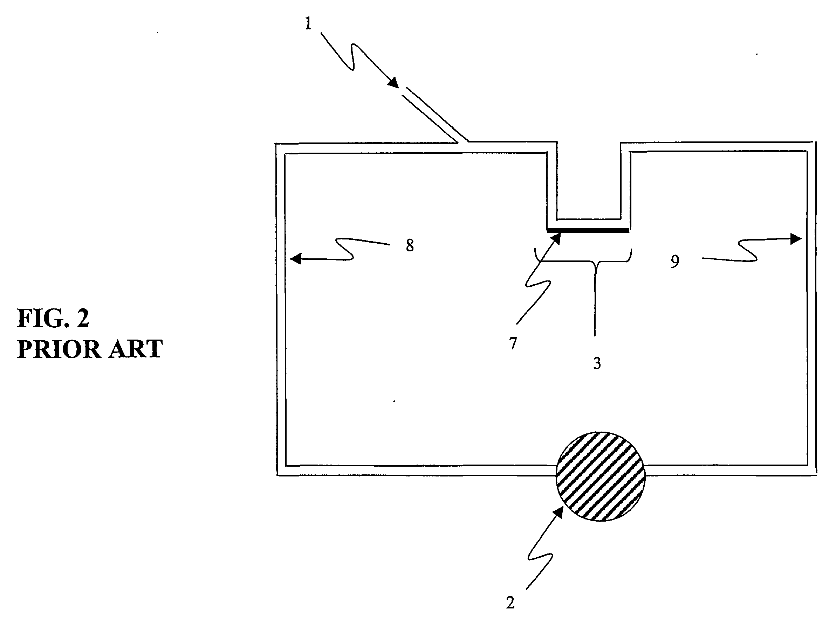

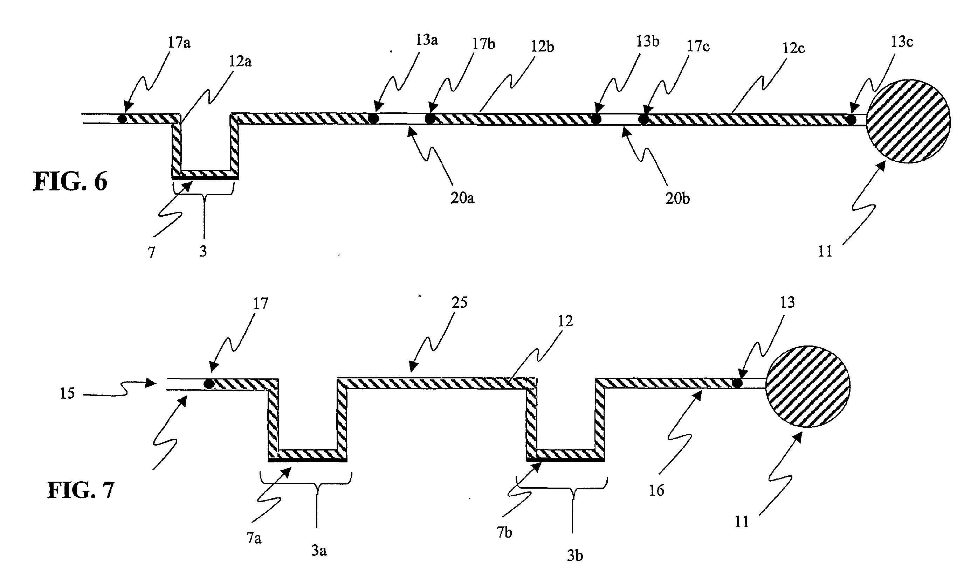

FIG. 2 is a schematic diagram of a biosensing sampling device employing sample circulation which has been previously utilized by the inventor. P. Schuck, et al. "Determination of Binding Constants by Equilibrium Titration with Circulating Sample in a Surface Plasmon Resonance Biosensor" *Anal. Biochem.* **265,** 79-91 (1998). According to the sample system shown in FIG. 2, a sample is injected into the sample inlet 1 whereupon it enters a first microchannel 8, flows through the sample chamber 3, which can include a microanalytical device 7, and exits the sample chamber 3 through a second microchannel 9. The sample then goes through a pump 2 and is re-circulated through the first microchannel 8 and back into the sample chamber 3 having a microanalytical device 7. Flow of sample occurs in a continuous loop. The system previously used by the inventor employed a plurality of sample chambers 3 connected in series, similar to the series of sample chambers described below with reference to FIG. 6 that may be utilized in the present invention.

When utilizing the biosensing sampling device of FIG. 2, sufficient sample must be supplied to the system in order to fill the entire loop of microfluidics, i.e. the first microchannel 8, the second microchannel 9, the sample chamber 3 and any associated microfluidics through and including the pump 2. Typically, as noted in the reference disclosing this sample system, volumes on the order of 500 µl are used. The observation time in this system is enhanced by re-circulating the fluid around the loop so that the fluid sample repeatedly comes into contact with the biosensor in the sample chamber 3. Although this system may be modified to reduce sample volume below 500 µl, substantial reductions below about 200 µl are difficult to achieve. This can be due to the volume of sample to be contained within the first microchannel 8 the second microchannel 9, the sample chamber 3 and the pump 2 that is required for continuous circulation.

The microanalytical devices useful in the present invention include devices for measuring interaction between analytic molecules in solution and molecules immobilized on a surface or the surface itself, particularly biosensors. Devices according to the invention may be constructed from a commercial biosensor equipped with microfluidic channels as the sensing unit or prepared using known procedures. In exemplary embodiments, the apparatus of the invention may utilize an external computer controlled syringe pump for the sample handling. Biacore X, manufactured by Biacore, Inc. (Piscataway, NJ) is an example of a commercial system that may be readily modified to prepare an apparatus according to one embodiment of the invention. Sample delivery to the sensing surface can be achieved through the aspiration of a small sample volume into the microfluidic channels, followed by the application of an oscillatory flow pattern. Properties of this sample delivery method include: (1) a high mass transfer rate of the molecules in the sample to the sensor surface (small stagnant layer); (2) efficient mixing of the sample within the laminar flow profile of at least one of the microchannels; and (3) a very long effective incubation time of the sensor surface with a very small sample volume. The oscillatory flow pattern produces no net transport of the sample with time. The system substantially improves on several existing problems with current methods. For example, the sample delivery system of the invention can use small volumes with a virtually unlimited observation time, can achieve sufficiently high mass transfer rates, and can be comparable in stability to a continuous flow system. The sample volume in the present invention is typically less than about 20 µl, may be less than about 15 µl and can be as low as from about 2 µl to about 5 µl.

The present invention can use microchannels of conventional size such as those present in conventional instruments. The microchannels are generally long in comparison to the width, and can be narrow so that, with motion through the microchannel, a laminar flow can be established and mixing occurs. For example, the microchannels may be several centimeters long, and may typically have widths and heights between about 50 µm and about 500 µm. Typical microchannels can be on the order of about 250 µm in width and depth. Although the exemplary embodiment of the invention described herein was prepared from an existing commercially available instrument, a device according to the present invention can also be prepared independently using methods known to persons skilled in the art.

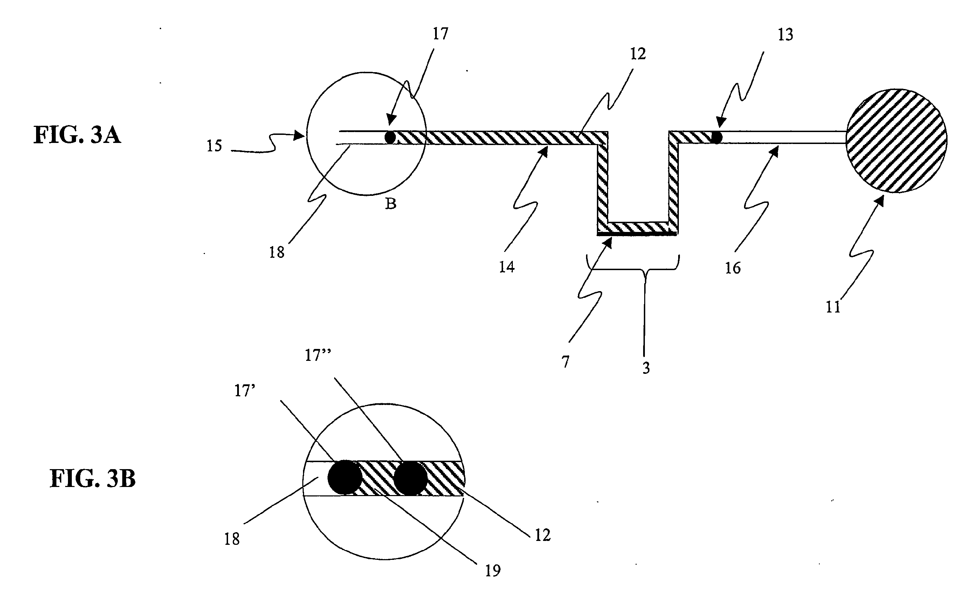

FIG. 3A is a schematic diagram of an exemplary embodiment of the present invention. In practice, the entire system is initially filled with a buffer. A first air bubble 13 is aspirated into the system through the system inlet 15. The sample 12 can then be aspirated into the system behind the first air bubble 13, allowing the sample 12 to flow through the first microchannel 14, fill the sample chamber 3, and flow into the second microchannel 16. The buffer can be forced out of the system by going through the oscillating pump 11 or a drain (not shown) that can be shut off from the system using a valve (not shown). A second air bubble 17 can then be aspirated into the first microchannel 14 behind the sample 12 through the sample inlet 15. Additional buffer may be aspirated into the system into the region 18 through the sample inlet 15 and behind the second air bubble 17. In other embodiments, the region 18 behind the air bubble 17 may be left vacant (i.e. filled with air) or filled with another solution. The sample 12 remains between the first air bubble 13 and second air bubble 17. Air bubbles having a volume of 2 µl are typically employed, although there is no particular requirement for the volume of the air bubble.

An alternative configuration of the second air bubble 17 within the circle B of FIG. 3A is shown in FIG. 3B. In this embodiment, the second air bubble 17 comprises two air bubbles 17', 17" separated by a very small volume of sample 19. This small volume of sample 19 can be, for example, about 0.3µl. The sample 19 between the two air bubbles 17', 17" that comprise the second air bubble 17 act as a sacrificial layer to prevent dilution of the sample 12 with buffer or other component filling region 18 on the opposite side of the air bubble 17 if oscillation goes too far to one side. It will be appreciated that the first air bubble 13 may similarly comprise a pair of air bubbles separated by a small volume of sample.

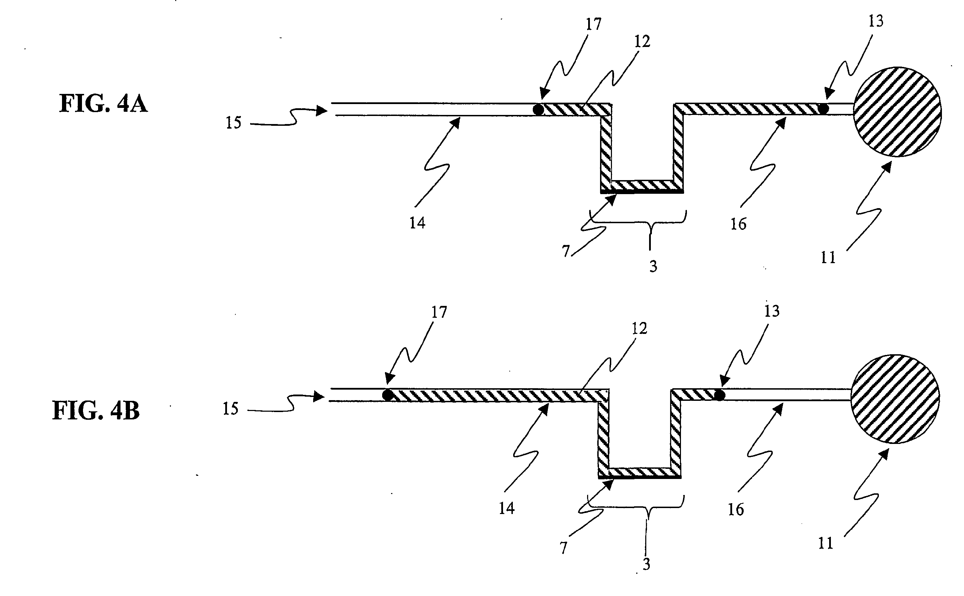

With further reference to FIG. 3A, it will be appreciated that the sample 12 fills the entire sample chamber 3, as well as portions of the first microchannel 14 and second microchannel 16. The volume of the sample 12 in the sample chamber 3 can be much less than the volume in the microchannels 14, 16. For example, the volume of sample 12 in the microchannels 14,16 may be 100 times the volume in the sample chamber 3. More than one pump may also be utilized to establish an oscillatory flow pattern. In operation, as described more fully below with reference to FIG. 4A and FIG. 4B, an oscillating pump 11, which may be, for example, a syringe pump, pumps the sample 12 back and forth from the first microchannel 14 to the second microchannel 16, traversing the sample chamber 3. This process can be repeated at high flow rates so that (a) there is a constant oscillating motion of sample through the sample chamber and microchannels; (b) there is no net movement of fluid, i.e. the average position of the fluid is centered in the sampling system; and (c) laminar flow in at least one of the microchannels and/or the sample chamber can cause molecular mixing.

Although the sample chamber 3 is shown as a separate component in FIG. 3, it may also be a region in a continuous microchannel. In an exemplary embodiment having the sample chambers as a region of a continuous microchannel, the sample chamber 3 refers to a portion of a continuous microchannel where the microanalytical device 7 is located (which is small compared to the microchannel 14 and 16). The first microchannel 14 and second microchannel 16 are thus regions of the microchannel on either side of the sample chamber 3. The microchannels 14,16 need not be limited to the linear design shown in FIG. 3A and the sample chamber 3 can have a much smaller volume than the total volume of sample 12 between the air bubbles 13, 17 in the microchannels 14, 16.

After measurement with the biosensor, the sample 12 may be pumped back to the inlet 15 and recovered. The microanalytical device 7 can be rinsed by using, for example, a unidirectional flow of buffer or other solution at a high rate. This process may use, for example, a three way valve on the syringe pump and aspiration of running buffer from a reservoir.

FIG. 4A and 4B show schematically the operation of the present invention. As shown in FIG. 4A, at some point during the sampling process, the entire sample chamber 3 is filled with sample 12. The first microchannel 14 contains a relatively small portion of the sample 12 bounded by the second air bubble 17. The second microchannel 16 is coupled to the sample chamber 3 and can be filled with a larger portion of sample 12. The sample 12 terminates at the first air bubble 13. As can be seen in FIG. 4A, at this extreme of the oscillation cycle, a relatively lengthy segment of the second microchannel 16 is filled with the sample 12.

Upon operation of the oscillating pump 11, the sample moves from the second microchannel 16 through the sample chamber 3, over the microanalytical device 7 and into the first microchannel 14. As shown in FIG. 4B, after one half cycle, the second microchannel 16 is partially filled with sample 12, whereas the first microchannel 14 can contain a larger volume of the sample 12. Significantly, at both extremes of the oscillation, the entire sample chamber 3 contains sample 12. In addition, there is always at least some portion of both the first microchannel 14 and second microchannel 16 that contains sample 12. Should one of the air bubbles 13, 17 move into the sample chamber 3, a possible loss of integrity of the data acquisition process may occur or the buffer solution beyond one of the air bubbles 13, 17 may interact with the detector surface. The use of a pair of air bubbles at each end of the sample, as shown in FIG. 3B, helps prevent loss of integrity of the sample 12. In actual operation, the oscillating pump transfers fluid between the two states that are shown in FIG. 4A and 4B. Thus, there is a constant motion of sample 12 within the sample chamber 3 as the sample 12 oscillates back and forth from the first microchannel 14 through the sample chamber 3 and into the second of microchannel 16. It will also be appreciated that the net position of the sample 12 is intermediate between the positions shown in FIG. 4A and FIG. 4B.

As will be appreciated from the study of FIG. 3A, 4A and 4B, the present invention can allow for a very small sample size. The sample 12 need only contain a sufficient volume to fill the sample chamber 3, and continually fill at least a portion of the first microchannel 14 and second microchannel 16. No additional sample volume need be required for the pump because the sample need not enter the pump. However, embodiments of the invention may allow the sample 12 to enter the pump.

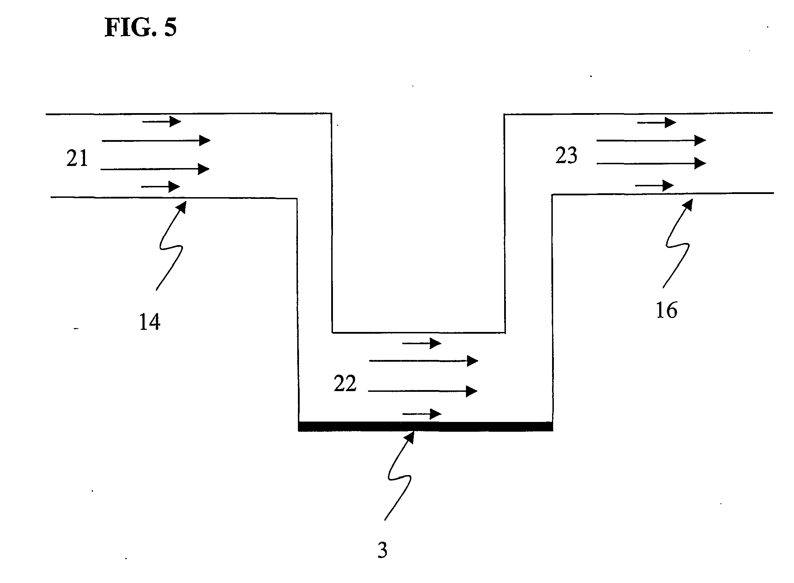

FIG. 5 is a schematic diagram of the laminar flow occurring in at least one of the microchannels 14, 16 or sample chamber 3 of the device. As can be seen in FIG. 5, as the sample flows from the first microchannel 14 through the sample chamber 3 and into the second microchannel 16 (as occurs during the oscillation depicted in going from the state shown in FIG. 4B to the state shown in FIG. 4A), laminar flow occurs in the microchannels and/or the sample chamber. The arrows 21 in FIG. 5 show the flow velocity of the sample as it flows through the first microchannel 14 where the longer arrows indicate a higher flow velocity. Flow at the periphery of the first microchannel 14 can be restricted whereas flow through the center of the microchannel is much more rapid. This same laminar flow may also occur in the second microchannel 16, as indicated by arrows 23, and in the sample chamber 3, as indicated by arrows 22. Mixing occurs as a result of shear velocity caused by laminar flow in the first microchannel 14, the second microchannel 16, and/or the sample chamber 3.

The sample chamber 3 contains a microanalytical device 7 on which, in a biosensor, the immobilized binding sites to which the analyte molecules bind are attached, usually at the surface of the microanalytical detector. In the absence of mixing within the sample chamber 3, a depletion zone can be generated in the vicinity of the microanalytical device 7 as the molecular surface binding reaction proceeds, e.g. in a stagnant layer that can form immediately above the immobilized binding sites. In conventional biosensor devices, the depletion zone is typically eliminated by supplying addition sample 12 to the sample chamber 3. However, the laminar mixing of the present invention can replenish the analyte molecules in the depletion zone without requiring additional sample volume.

As is obvious by the above discussion, the laminar flow established in the present invention exists in the microchannels 14, 16 and/or the sample chamber 3. One will appreciate that it is not necessary that mixing from laminar flow in both of the microchannels 14, 16 and in the sample chamber 3 is required for sufficient molecular mixing to occur in order to allow an increase sensitivity. It is sufficient that the laminar flow of sample 12 be established in either the first microchannel 14, the second microchannel 16 or the sample chamber 3 to allow molecular mixing. Because a larger sample volume is contained in the microchannels than in the sample chamber, the high flow rate during the oscillation replenishes molecules in the depletion zone of the sample chamber.

Using longer microchannels, multiple samples may be loaded and analyzed. FIG. 6 is a schematic diagram of an exemplary embodiment of the present invention having multiple samples. A first sample 12a is positioned between a first air bubble 13a and a second air bubble 17a. The sample 12a is sufficiently large to fill the sample chamber 3 and at least a portion of the microchannels (not labeled) on each side of the sample chamber 3. The second sample 12b is similarly positioned between a first air bubble 13b and second air bubble 17b. Between the second air bubble 17a of the first sample 12a and the first air bubble 13b of the second sample 12b, is a first sample free space 20a. A third sample 12c may be positioned between a first air bubble 13c and a second air bubble 17c. The third sample 12c, if present, can be separated from the second sample 12B by a second sample free space 20b. The first and second sample free spaces 20a, 20b may be enlarged air spaces or may be filled with a liquid such as, for example, a buffer solution. Additional samples (12d, 12e, ...) may be similarly incorporated.

It will be appreciated that one or more of the first air bubbles 13a,13b, 13c and/or second air bubbles 17a, 17b, 17c that surround the samples 12a, 12b, 12c may comprise more than one air bubble as described above with reference to FIG. 3B. It will also be appreciated that the volume of samples 12a, 12b, 12c are similar and sufficient for practicing the invention.

In use, the first sample 12a is positioned in the sample chamber 3. The oscillatory pump 11 operates on the first sample 12a to cause a back and forth motion as previously described with reference to FIG. 4A and 4B. This back and forth motion of the first sample 12a through the sample chamber 3 and the adjacent microchannels (not labeled) causes laminar mixing to facilitate measurement of the particular property measured by the microanalytical device (not labeled) in the sample chamber 3. When sampling of the first sample 12a is complete, the pump 11 operates to move the first sample 12a out of the sample chamber 3. At the same time, the second sample 12b is moved toward the sample chamber 3. The first sample free space 20a may move continuously through the sample chamber 3 as the second sample 12b approaches the sample chamber 3. In other embodiments, the pump 11 may operate to move the first sample free space 20a back and forth through the sample chamber 3. If the first sample free space 20a comprises a buffer or other blank solution, this back and forth motion may be used as a wash to remove analyte of the first sample 12a from the sample chamber 3 or to remove analyte adhering to the microanalytical device 7 surface (not labeled) in the sample chamber 3.

The pump 11 (or an additional pump) then operates to move the first sample free zone 20a through the sample chamber and transfer the second sample 12b into the sample chamber 3. The pump 11 then acts to move the second sample 12b back and forth through the sample chamber 3 allowing detection of an analyte in the second sample 12b. After sampling of the second sample 12b is complete, the pump 11 moves the second sample 12b away from the sample chamber 3. The second sample free space 20b enters the sample chamber 3. The action of the second sample free space 20b is similar to that of the first sample free space 20a. The pump 11 then acts to transfer the third sample 12c into the sample chamber 3. Each of the multiple samples can also be recovered as was possible for the single sample embodiment.

It will be appreciated by those skilled in the art that more than three samples may be loaded and sequentially sampled. The sample free spaces 20a, 20b, 20c ... may also comprise more than one component. For example, the first sample free space 20a may comprise a series of buffers, which may be separated by additional air bubbles, designed to raise (or lower) the pH at the sensor surface. This may be useful, for example, if the first and second sample 12a, 12b are in solutions having a different pH. Other possible use of different buffers include, for example, effective washing of a detector surface where a high (or low) pH is required to remove the analyte, where base (or acid) treatment of the detector surface is required between samples. Further modifications of the sample free space 20a, 20b and operation between samples will be apparent to persons skilled in art utilizing the invention in light of the present disclosure.

FIG. 7 is a schematic diagram of an exemplary embodiment of the present invention having multiple microanalytical devices 7a, 7b. According to this embodiment of the invention, two sample chambers 3a and 3b with microanalytical devices 7a, 7b can be utilized which are serially connected by a third microchannel 25. For example, in a circulating loop system, the inventor has used a series of two sensors wherein one biosensor is activated for detection and a second biosensor is left inactivated. See *Anal. Biochem.* **265** at 81. By utilizing such an arrangement, the inactivated microsensor can be used as a reference for subtracting out the effects of signal fluctuations due to aspiration, pumping and oscillation, as well as measuring non-specific surface adsorption of the analyte molecules, and refractive index of the sample solution. Using such a configuration in the above referenced article, the determination of binding constants by equilibrium titration was accomplished. The present invention may similarly incorporate multiple sensors allowing similar experiments with reduced sample volume. It will be appreciated that multiple microanalytical devices 7a, 7b may be used for a variety of other purposes as well. These might include, for example, use of a reference standard, as above, or use of multiple sensing chambers with biosensors detecting multiple molecular components in a single sample, or the binding properties of one analyte molecules to different immobilized targets. Such use of multiple sensor surfaces is state-of-the-art, for example, the commercial Biacore 2000 instrument (Biacore AB) contains four sample chambers that can be used in series. However, this instrument does not offer the other features and advantages, for example small sample size, of the present invention.

As will be appreciated by those skilled in the art, the present invention may be used for the same types of experiments as presently available biosensors. For example, a sample may be applied to the sensor to saturate binding sites on the detector. Dissociation constants can then be obtained by switching from sample to buffer and monitoring detector response.

The apparatus of the present invention may be prepared by techniques known in the art, either by modification of existing instruments, or from readily available materials. (See, e.g., Becker and Gaertner *Electrophoresis* **21**, 12-26, (2000); Stefan and Urbaniczky "Integrated fluid handling system for biomolecular interaction analysis" *Anal. Chem.* **63**, 2338-2345 (1991)). A microsensor chip such as those available from Biacore AB can be inserted into the sample chamber for detecting the analyte of interest. An oscillating pump, preferably a syringe pump with a stepping motor, is situated at the terminus of one of the microchannels opposite the sample inlet. It will be appreciated that the pump may be situated at some other portion of the device, so long as the pump is able to oscillate a small sample volume back and forth from the first microchannel through the sample chamber and into the second microchannel. As with the standard commercial systems from which the present apparatus may be prepared, a computer may control the pumps, detection and acquisition of the biosensor signal.

During operation, typical control parameters can include the volume of the sample, the volume of the air-bubble(s), the volume of the sample that may be used for subdividing the air bubbles, the flow rate for aspirating the sample, the distance between the initial site of sample aspiration and the flow chamber, the volume describing the amplitude of the oscillation, and the flow rate for the back and forth oscillation. These parameters may be varied by routine experimentation, as would be known to persons of ordinary skill in the art to obtain suitable data. Parameters may be varied to account for factors such as, for example, sensor sensitivity, reaction rate constants of the analyte, concentration of analyte, surface concentration of immobilized sites, volume and geometry of the microchannels, volume and geometry of the sample chamber and geometry of the microchannel at the site of initial aspiration.

As demonstrated by the examples which follow, experiments utilizing conventional unidirectional flow apparatus not only take a larger volume, but can be limited in observation time by the maximal volume of the injection loop. The use of a smaller flow rate in unidirectional sample application is not a good way for compensating the volume constraints, because it may not allow a sufficient mass transfer to monitor rapid molecular binding reactions. As is known, the mass transfer rate in a laminar flow decreases with decreasing flow rate and, as a result, if a smaller flow rate were used, the time-course of the observed signal would no longer represent the true molecular binding reaction, but predominantly the mass transfer through the stagnant layer, and therefore would not provide for good estimates of the molecular properties of the analyte.

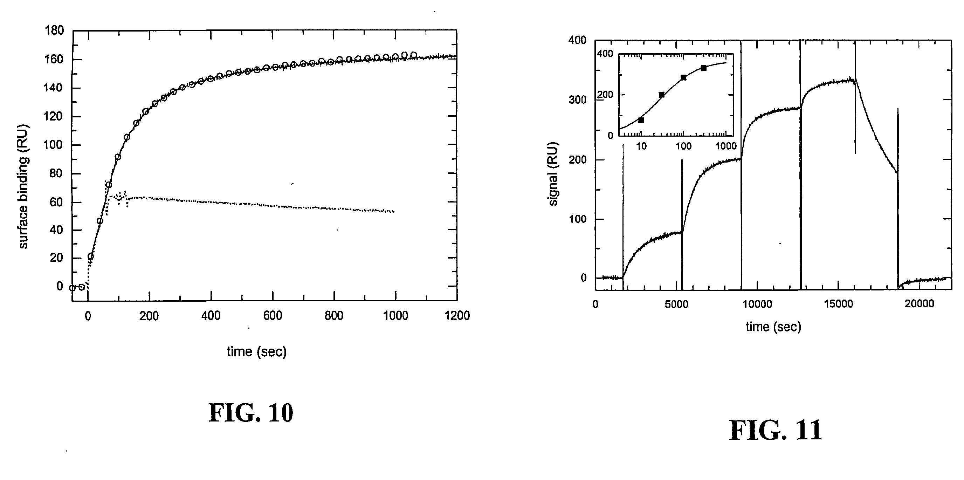

The consistency for the measured binding reaction using the laminar mixing method of the present invention as compared to the large volume unidirectional flow method may vary slightly. (See Example 4, FIG. 10 for an example with very high correlation.) The precise values can depend somewhat on parameters such as, for example, the diffusion constant of the analyte, the density of the surface binding sites, and the non-specific analyte adsorption to the walls of the microfluidics.

However, in many such comparisons with different analyte concentrations, and two different chemically reacting protein pairs, it has been found that, with the laminar mixing technique of the present invention, the observed rate constant of the binding progress varies no more than about 10% from the reaction kinetics measured with a conventional unidirectional flow configuration. This is often sufficiently precise for the measurement of molecular binding constants, as other sources of error can in practice be much larger, such as, for example the precision of the measurement of active analyte concentration, errors introduced from the surface immobilization, and systematic errors from unknown reaction schemes.

### EXAMPLE 1

An apparatus according to the invention was constructed from a Biacore X instrument, which has the microfluidics and the sensor in place, a Gilson 402 syringe pump, which is a precise syringe pump with a stepping motor, and a PC. A removable sensor chip was inserted into the microchannel of the Biacore X instrument to form a surface of the microchannel. The Biacore X was operated in sensing mode only (i.e. the pump internal to the Biacore X was disconnected), and the microfluidics accessible by the inlet and outlet ports. Thus, microchannels and sample chambers described herein are all contained within the Biacore X instrument. The Gilson 402 syringe pump was connected to one of the ports, and the other port was extended by a piece of flexible polyethylene or teflon tubing to allow sample aspiration from Eppendorf tubes. The pump was controlled by computer software utilizing driver software from Gilson that allows connection of the pump to the RS232 output of the PC. Control parameters were entered into the software allowing control of sample handling by utilizing the microfluidics and the surface binding detector of the Biacore X. Typical control parameters include the sample volume (in the order of 10 µl), the volume of the air-bubble (about 2µl), the volume of the sample for subdividing the air bubbles (about 0.3µl), the flow rate for aspirating the sample (about 20 µl/min), the distance between the initial site of sample aspiration and the flow chamber (this depends much on the tube used for aspiration and for the present instrument 24.5 µl), the volume describing the amplitude of the oscillation (0.5 to 2 µl), the flow rate for the back and forth oscillation (between about 20 and about 50 µl/min).

### COMPARATIVE EXAMPLE 2

Using the instrument described in Example 1, a carboxymethylated dextran chip CM5 (Biacore, Inc.) was chemically modified with an anti-myoglobin monoclonal antibody by standard amine coupling chemistry (see for example, Current Protocols in Protein Science (Wiley), 1999, Unit 20.2). Human myoglobin at a concentration of 100 nM was dissolved in 10mM Hepes, pH 7.4, 150 mM NaCl, 3 mM EDTA, 0,005%'Tween 20. A second sample chamber in the Biacore X was unmodified, in order to record the refractive index changes from the different solutions, as well as non-specific adsorption of myoglobin to the CM5 chip. Data were obtained utilizing the difference data between the functionalized and the unmodified sample chamber. In this way, when myoglobin solution was brought in contact with the sensor surface, the time-course of the specific surface binding of myoglobin to the immobilized antibody was observed. If no other factors, such as mass transfer, are rate-limiting for this reaction, the molecular binding reaction can be observed, and mathematical modeling reveals molecular binding parameters (see, *Annu. Rev. Biophys. Biomol. Struct.,* 26 (1997) 541-566).

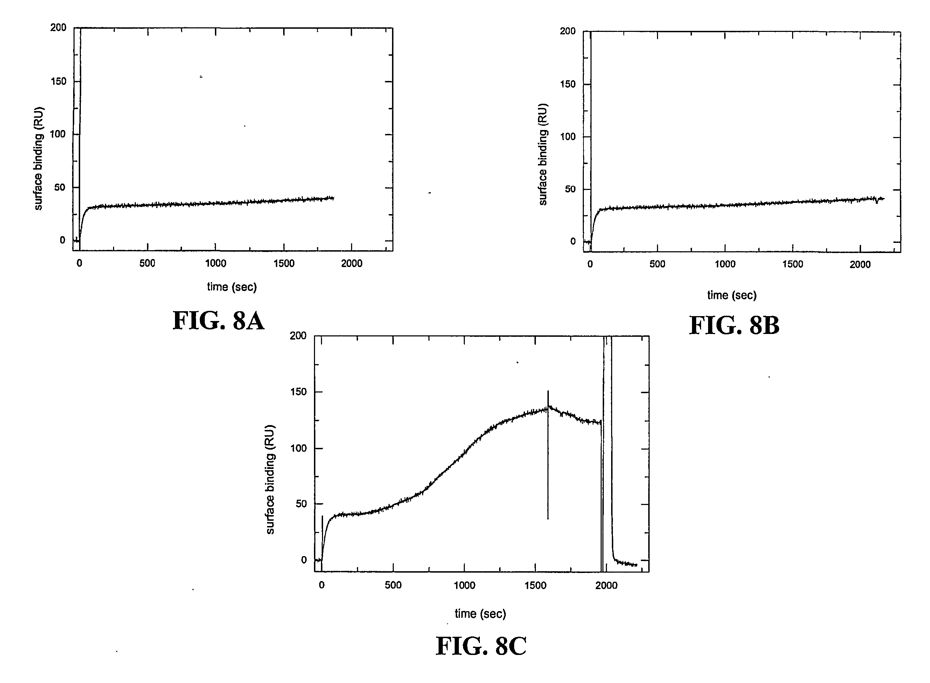

For comparison, different configurations for the sample application and mixing were used. The time-course of the signal indicative of surface binding when aspirating 5 µl or 2 µl of sample, without mixing or flow, are shown in FIG. 8A and 8B, respectively. After an initial rapid binding phase, only a slow increase was observed, which was presumably a consequence of the formation of a depletion zone in the vicinity of the sensor surface. The slow ascent reflects the fact that diffusion alone was very slow for replenishing the molecules in the depletion zone. Both curves are virtually identical, and similarly incompatible with the study of molecular properties, because the time-course of binding using this configuration is governed by the diffusion as the rate-limiting step.

This configuration without mixing and flow was also found to be very unstable. Small convective drifts significantly influence the mass transfer rate as shown in FIG. 8C which was obtained by repeating the experiment using a second 5µl sample.

Example 3-8 demonstrate further applications of the present invention. As also shown in the data of the examples, the present invention gives results comparable to results obtained using much larger sample volumes and conventional apparatus.

### EXAMPLE 3

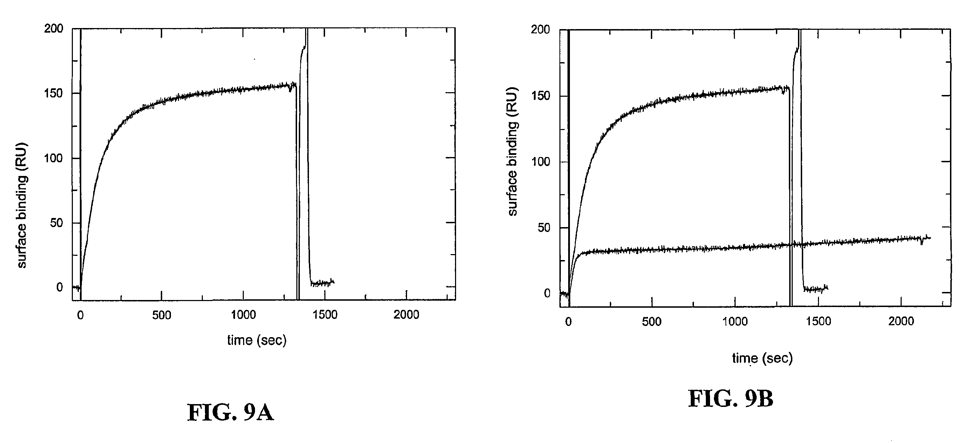

FIG. 9A shows the signal obtained when laminar mixing is present as in the present invention. The data of FIG. 9A was obtained from a 5 µl sample with oscillatory flow, using an amplitude of mixing of 1 µl at a flow rate of 20 µl/min. As shown in FIG. 9A, mass-transfer was much more effective, because of the mixing, and correspondingly, the time-course of the signal reflects the true molecular reaction kinetics. FIG. 9B shows the signal obtained from a 5µl sample without mixing, as described in Comparative Example 2 (lower line), superimposed on the signal obtained from a 5 µl sample with mixing according to the invention (upper line).

### EXAMPLE 4

FIG. 10 shows a comparison of the binding signal when using 5 µl sample with mixing (upper line), 5 µl injected conventionally with a uni-directional flow at 5 µl/min (lower dotted line), and approximately 50 µl injected conventionally at a flow rate of 3 µl/min (Shown by the circles on the upper line.) As can be seen, data from a 5 µl sample using the present invention and a 50 µl using a conventional method are virtually superimposed. The reaction observed using a small volume and conventional injection was much shorter (lower line), such that a much lower signal was detected and, more importantly, only a very short time interval of the molecular binding reaction was observed. The decrease in signal shown in the lower line of FIG. 10 was the result of a washing-out phase caused by the running buffer which follows the sample. It is also notable that the larger sample volume injected at a smaller flow rate gave data on the molecular binding reaction that was very similar to data obtained from the 5 µl with mixing.

### EXAMPLE 5

The present invention may also be used for measuring molecular rate and equilibrium constants. FIG. 11 shows the signal obtained when a sequence of four samples of 4 µl each, with increasing concentration of analyte, were brought in contact with a sensor surface. All samples were separated by air bubbles. After the first sample was transferred to the sensor surface (at t=1,800 sec), oscillatory flow was applied until the sensor signal approached a steady-state (t=5,000 sec). The next higher concentration sample was then transferred to the sensor surface, and oscillatory flow applied. This process was repeated for the remaining samples. After the highest concentration reached a steady-state signal (t=16,000 sec), a high unidirectional buffer flow was applied which allowed observation of the dissociation of the analyte from the sensor surface (t=16,000-18,500). This was followed by regeneration of the surface t=19,000, and a return of the signal to baseline at t=20,000 sec.

Using this technique, the steady-state signals from the sensor at each sample concentration allow a thermodynamic determination of the binding constant of the analyte. This is shown in the inset of FIG. 11, which depicts the steady-state signals at different concentrations (squares) and the mathematically calculated analysis (line). The analysis of the curvature of the signal from the approach to the steady-state at each concentration allow the determination of the association rate constant (see Analytical Chemistry 73 (2001) 2828-2835). This example thus shows the application of extended time-range experiments with very small sample volumes that is made possible by use of the present invention. This enables thermodynamic determination of the binding constant from steady-state values that has not been previously obtainable by conventional systems using such small volumes.

The experiment can also be conducted with a wash for dissociation and surface regeneration after each sample was brought in contact with the surface (data not shown). This corresponds to the sequence of (1) data acquisition with association, followed by (2) dissociation and surface regeneration, which is commonly used in surface binding experiments (See, for example Ann. Rev. Biophys. Biomol. Struct, 26:541-566).

### EXAMPLE 6

Even in cases where the primary purpose of the experiment is not the determination of thermodynamic or kinetic binding constants, the ability to use small sample volumes can be crucial in many experimental settings. For example, in a study of certain human serum samples, the reactivity of anti-idiotypic antibodies was measured by observation of their kinetics of binding to an antigenic surface, combined with a solution competition assay using the present invention. (N.R. Gonzales, P. Schuck, J. Schlom, and S.V.S. Kashmiri. A surface plasmon resonance assay for sera reactivity of antibodies. Published at NIH Research Festival 2001 (<<http://festiva101.nih.gov/search.taf? function=detail&t_Posters_uidl=379>>. Persons skilled in the art will recognize that the volume limitations imposed when working with blood and tissue samples are important considerations when assessing the feasibility of the assays. The present invention can enable the reduction of the sample volumes required for biosensing to a practical level for blood and tissue samples.

### EXAMPLE 7

In another application, the ability to increase the contact time of the sample with the sensor surface provided by the invention has been used in the study of a very slow binding reaction. The extended contact time allowed a distinction to be made between saturable chemical binding kinetics and linear accumulation of material at the sensor surface. (Chou, C.-L., Sadegh-Nasseri, *S. J. Exp. Med.* **2000,** *192*, 1697-1706)

### EXAMPLE 8

The usefulness of small sample volumes with extended contact time is also shown by the application of the invention in the context of biosensor experiments for capture and recovery of analyte prior to mass spectroscopy (J.J. Gilligan, P. Schuck, A.L. Yergey. Mass spectrometry after capture and small volume elution of analyte from a surface plasmon resonance biosensor. Analytical Chemistry 74 (9), 2041-2047, 2002). In these types of experiments, the invention is used to concentrate analyte molecules on a sensor surface. The analyte can then be rinsed from the surface and subjected to further analysis.

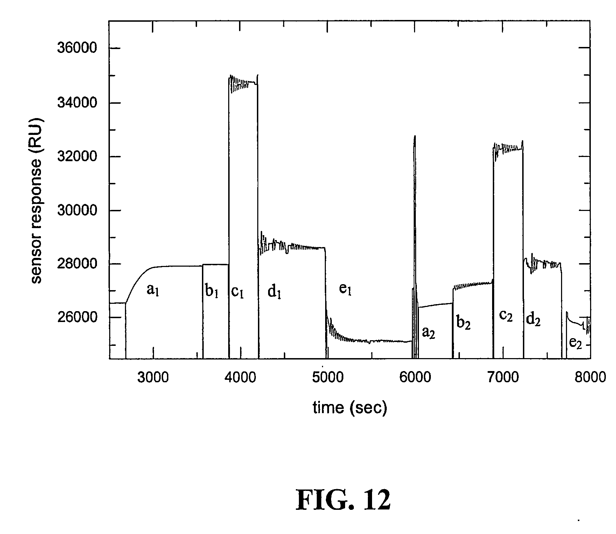

FIG. 12 is typical biosensor trace of this experiment utilizing the present invention. In this particular application, a sequence of five samples, consisting of 5 µl each of analyte sample a₁, a₂; three buffer washes b₁, b₂, C₁, C₂, d₁, d₂; and a recovery buffer e₁, e₂ were sequentially brought in contact with the sensor surface, and an oscillatory flow applied in each case. The first phase (from t= ~ 2,500 to 3,500 sec) shows the surface binding signal obtained during the capture of the molecules from the analyte sample a₁ to the biosensor surface. The signal during the buffer washes b₁, c₁, d₁ represents largely the refractive index difference of these buffers. The signal during exposure of the sensor surface to the recovery buffer e₁₂ (t= 5,000 - 6,000 sec) showed a decrease caused by dissociation of the previously captured molecules into the recovery buffer. A second sequence of application of the samples a₂ to e₂ followed. The purpose of this experiment was to utilize the specific capture of analyte molecules from a sample volume a₁, a₂ and recovery of the analyte into the recovered volume e₁, e₂. The recovered volume e₁ and e₂ were then subjected to mass spectrometric analysis of the macromolecular composition allowing the identification of the analyte molecules.

Similar combinations ofbiosensing and sample recovery for mass spectrometry have been used previously. Integration of the detection of surface binding and dissociation in real-time into the capture and release process can provide significant advantages as compared to analyte separation by, for example, affinity chromatography. Advantages provided by the present invention for this application include, for example, the ability to use a very small sample volume for biosensing and analyte capture. Because the binding progress in this phase can be observed and extended at a high mass transfer rate until a steady-state is reached, much more efficient capture of the analyte molecules can be achieved. Without the oscillatory flow, only a relatively small number of molecules would bind to the surface because of the formation of a depletion zone (as illustrated in FIG. 8A). Similarly, the oscillatory flow can be applied to the recovery (e) and dissociation can be observed and extended to steady-state. Other similar applications of the present invention to concentrate samples using a biosensor or other surface will be apparent to persons skilled in the art. The invention can also be used to prepare samples for other analytical experiments, even when only small sample volumes are available.

Persons skilled in the art will recognize that the present invention may be used for purposes other than those described in the above non-limiting examples. The invention is particularly suitable for measuring interactions between analytical molecules in solution with molecules immobilized on a surface or the surfaces itself. These types of interactions may be used to evaluate other properties of molecules or surfaces. For example, the invention may be used to measure or assessing conformational changes ofbiomolecules, for example of proteins. For measuring conformational changes, the microanalytical device in the sample chamber may be a waveguide biosensor. There is also no requirement that molecules in the sample react with particular molecules on the surface of the detector. Rather, the invention may be used to measure the interaction of molecules in the analyte with the surface itself. The surface may be, for example, a man-made material. A particular application of this use would be the measurement of protein absorption on a man-made surface. This would thus present a method for assessing the biocompatibility of the man made material. Likewise, the invention may be used to measure the interaction of biomolecules with other synthetic or natural molecules.

The embodiments illustrated and discussed in this specification are intended only to teach those skilled in the art the best way known to the inventors to make and use the invention. All examples presented are representative. The above-described embodiments of the invention may be modified or varied, and elements added or omitted, without departing from the scope of the invention, as defined in the claims. In particular, although the specification refers to biosensors in general, it will be appreciated that the apparatus and method of the present invention may be applied to other microanalytical devices as well.

## Claims

1. A device for molecular sensing comprising:
a sample chamber (3);
a first microchannel (14) in fluid communication with the sample chamber (3);
a second microchannel (16) in fluid communication with the sample chamber (3); and
at least one pump (11) to facilitate pumping of a fluid sample (12) from the first microchannel (14) through the sample chamber (3) and into the second microchannel (16) and from the second microchannel through the sample chamber and into the first microchannel; wherein
at least one of the first microchannel (14), sample chamber (3) and second microchannel (16) having a width that causes molecular mixing of the sample by laminar flow within the fluid sample as the fluid sample moves through the at least one microchannel and/or sample chamber; and
the sample chamber (3) comprising a microanalytical detector (7).

2. The device of claim 1, the microchannels (14, 16) having a width of from about 10 µm to about 1 mm, preferably from about 50 µm to about 500 µm.

3. The device of claim 1 or claim 2, the sample chamber (3) comprising a volume of about 1 nl to about 10 µl, preferably from about 10 nl to about 100 nl.

4. The device of any one of the preceding claims , wherein the microanalytical detector (7) is arranged to assess binding rate of reactions between molecules selected from pairs of proteins, antibody and antigens, proteins and carbohydrates, proteins and peptides, proteins and nucleic acids, pairs of nucleic acids, and molecules and a surface.

5. The device of any one of claims 1 to 3, wherein the microanalytical detector (7) is arranged to assess equilibrium constants of reactions between molecules selected from pairs of proteins, antibody and antigens, proteins and carbohydrates, proteins and peptides, proteins and nucleic acids, pairs of nucleic acids, and molecules and a surface.

6. The device of any one of claims 1 to 3, wherein the microanalytical detector (7) is arranged to assess conformational changes of molecules.

7. The device of any one of claims 1 to 3, wherein the microanalytical detector (7) is arranged to assess equilibrium constants of bimolecular reactions between a pair of interacting or chemically reacting molecules.

8. The device of any one of the preceding claims, the device capable of assessing enzyme activity.

9. The device of any one of the preceding claims, the pump (11) comprising an oscillating pump.

10. The device of claim 9, wherein the oscillating pump (11) is a syringe pump.

11. A method for molecular sensing comprising :
pumping a fluid sample (12) to be analyzed through a first microchannel (14) and a sample chamber (3) into a second microchannel (16), said sample chamber comprising a microanalytical detector (7),
reversing the flow of said fluid sample (12) such that the fluid sample flows from the second microchannel (16) into the sample chamber (3) and then into the first microchannel (14), and detecting a signal from the detector (7), wherein
the sample chamber (3) is continuously filled with a portion of the fluid sample (12),
at least a portion of both the first microchannel (14) and the second microchannel (16) contains continuously a portion of the fluid sample (12), and
at least one of the first microchannel (14), sample chamber (3) and second microchannel (16) has a width that causes molecular mixing by laminar flow within the fluid sample (12) as the fluid sample moves through the at least one microchannel and/or sample chamber.

12. The method of claim 11, wherein the fluid sample (12) has a volume of less than about 20 µl, preferably of from about 3 µl to about 8 µl.

13. The method of claim 11 or claim 12, further comprising replacing the fluid sample (12) with a buffer and monitoring a signal from the detector (7).

14. The method of any one of claims 11 to 13, wherein the sample (12) is analyzed to assess binding rates of reactions between molecules selected from the group consisting of pairs of proteins, antibody and antigens, proteins and carbohydrates, proteins and peptides, proteins and nucleic acids, pairs of nucleic acids, and molecules and a surface.

15. The method of any one of claims 11 to 13, wherein the sample (12) is analyzed to assess equilibrium constants of reactions between molecules selected from the group consisting of pairs of proteins, antibody and antigens, proteins and carbohydrates, proteins and peptides, proteins and nucleic acids, pairs of nucleic acids and molecules and a surface.

16. The method of any one of claims 11 to 13, wherein the sample (12) is analyzed to assess equilibrium constants of reactions between a pair of interacting or chemically reacting molecules.

17. The method of any one of claims 11 to 13, wherein the sample (12) is analyzed to assess enzyme activities.

18. The method of any one of claims 11 to 13, wherein conformational changes in molecules are measured.

19. The device of claim 6 or the method of claim 18, wherein said molecules are biomolecules.

20. The device of any one of claims 1 to 10 and 19 or the method of any one of claims 11 to 19, wherein the microanalytical detector (7) comprises a biosensor.

21. The device or method of claim 20, wherein the biosensor is a waveguide biosensor.

22. A method for biosensing comprising:
providing a device according to either of claims 9 and 10;
aspirating a first air bubble (13) into the device;
aspirating a fluid sample (12) comprising an analyte molecule into the device;
aspirating a second air bubble (17) into the device;
activating the pump (11) to cause the fluid sample to flow back and forth from the first microchannel (14) to the sample chamber (3) and into the second microchannel (16), and from the second microchannel (16) to the sample chamber (3) and into the first microchannel (14); and
detecting a signal from the microanalytical detector (7); wherein
the microanalytical detector is a biosensor (7), at least a portion of the fluid sample (12) is in contact with the biosensor (7), and at least a portion of the first and second microchannels (14, 16) contains at least a portion of the fluid sample.

## Patentansprüche

1. Vorrichtung zur Molekülerfassung, umfassend:
eine Probenkammer (3),
einen ersten Mikrokanal (14) in Fluidverbindung mit der Probenkammer (3),
einen zweiten Mikrokanal (16) in Fluidverbindung mit der Probenkammer (3) und
mindestens eine Pumpe (11) zum Erleichtern des Pumpens einer Fluidprobe (12) von dem ersten Mikrokanal (14) durch die Probenkammer (3) und in den zweiten Mikrokanal (16) und von dem zweiten Mikrokanal durch die Probenkammer und in den ersten Mikrokanal, wobei
mindestens eines bzw. eine des ersten Mikrokanals (14), der Probenkammer (3) und des zweiten Mikrokanals (16) eine Breite aufweist, die ein molekulares Mischen der Probe durch eine laminare Strömung innerhalb der Fluidprobe verursacht, wenn sich die Fluidprobe durch den bzw. die mindestens einen Mikrokanal und/oder Probenkammer bewegt, und
die Probenkammer (3) einen mikroanalytischen Detektor (7) umfasst.

2. Vorrichtung nach Anspruch 1, bei der die Mikrokanäle (14, 16) eine Breite von etwa 10 µm bis etwa 1 mm, vorzugsweise von etwa 50 µm bis etwa 500 µm aufweisen.

3. Vorrichtung nach Anspruch 1 oder Anspruch 2, bei der die Probenkammer (3) ein Volumen von etwa 1 nl bis etwa 10 µl, vorzugsweise von etwa 10 nl bis etwa 100 nl umfasst.

4. Vorrichtung nach einem der vorstehenden Ansprüche, bei welcher der mikroanalytische Detektor (7) so angeordnet ist, dass die Bindungsgeschwindigkeit von Reaktionen zwischen Molekülen, die aus Paaren von Proteinen, Antikörper und Antigenen, Proteinen und Kohlenhydraten, Proteinen und Peptiden, Proteinen und Nukleinsäuren, Paaren von Nukleinsäuren und Molekülen und einer Oberfläche ausgewählt sind, bewertet wird.

5. Vorrichtung nach einem der Ansprüche 1 bis 3, bei welcher der mikroanalytische Detektor (7) so angeordnet ist, dass die Gleichgewichtskonstanten von Reaktionen zwischen Molekülen, die aus Paaren von Proteinen, Antikörper und Antigenen, Proteinen und Kohlenhydraten, Proteinen und Peptiden, Proteinen und Nukleinsäuren, Paaren von Nukleinsäuren und Molekülen und einer Oberfläche ausgewählt sind, bewertet wird.

6. Vorrichtung nach einem der Ansprüche 1 bis 3, bei welcher der mikroanalytische Detektor (7) so angeordnet ist, dass die Konformationsänderungen von Molekülen bewertet werden.

7. Vorrichtung nach einem der Ansprüche 1 bis 3, bei welcher der mikroanalytische Detektor (7) so angeordnet ist, dass die Gleichgewichtskonstanten von biomolekularen Reaktionen zwischen einem Paar von wechselwirkenden oder chemisch reagierenden Molekülen bewertet werden.

8. Vorrichtung nach einem der vorstehenden Ansprüche, wobei die Vorrichtung eine Enzymaktivität bewerten kann.

9. Vorrichtung nach einem der vorstehenden Ansprüche, bei der die Pumpe (11) eine oszillierende Pumpe umfasst.

10. Vorrichtung nach Anspruch 9, bei der die oszillierende Pumpe (11) eine Spritzenpumpe ist.

11. Verfahren zur Molekülerfassung, umfassend:
Pumpen einer zu analysierenden Fluidprobe (12) durch einen ersten Mikrokanal (14) und eine Probenkammer (3) in einen zweiten Mikrokanal (16), wobei die Probenkammer einen mikroanalytischen Detektor (7) umfasst,
Umkehren der Strömung der Fluidprobe (12) derart, dass die Fluidprobe von dem zweiten Mikrokanal (16) in die Probenkammer (3) und dann in den ersten Mikrokanal (14) strömt, und Erfassen eines Signals von dem Detektor (7), wobei
die Probenkammer (3) kontinuierlich mit einem Teil der Fluidprobe (12) gefüllt wird,
mindestens ein Teil sowohl des ersten Mikrokanals (14) als auch des zweiten Mikrokanals (16) kontinuierlich einen Teil der Fluidprobe (12) enthält, und
mindestens einer bzw. eine des ersten Mikrokanals (14), der Probenkammer (3) und des zweiten Mikrokanals (16) eine Breite aufweist, die ein molekulares Mischen durch die laminare Strömung innerhalb der Ftuidprobe (12) verursacht, wenn sich die Fluidprobe durch mindestens eine(n) des Mikrokanals und/oder der Probenkammer bewegt.

12. Verfahren nach Anspruch 11, bei dem die Fluidprobe (12) ein Volumen von weniger als etwa 20 µl, vorzugsweise von etwa 3 µl bis etwa 8 µl aufweist.

13. Verfahren nach Anspruch 11 oder Anspruch 12, das ferner das Ersetzen der Fluidprobe (12) durch einen Puffer und Überwachen eines Signals von dem Detektor (7) umfasst.

14. Verfahren nach einem der Ansprüche 11 bis 13, bei dem die Probe (12) zur Bewertung der Bindungsgeschwindigkeiten von Reaktionen zwischen Molekülen, die aus der Gruppe bestehend aus Paaren von Proteinen, Antikörper und Antigenen, Proteinen und Kohlenhydraten, Proteinen und Peptiden, Proteinen und Nukleinsäuren, Paaren von Nukleinsäuren und Molekülen und einer Oberfläche ausgewählt sind, analysiert wird.

15. Verfahren nach einem der Ansprüche 11 bis 13, bei dem die Probe (12) zur Bewertung von Gleichgewichtskonstanten von Reaktionen zwischen Molekülen, die aus der Gruppe bestehend aus Paaren von Proteinen, Antikörper und Antigenen, Proteinen und Kohlenhydraten, Proteinen und Peptiden, Proteinen und Nukleinsäuren, Paaren von Nukleinsäuren und Molekülen und einer Oberfläche ausgewählt sind, analysiert wird.

16. Verfahren nach einem der Ansprüche 11 bis 13, bei dem die Probe (12) zur Bewertung von Gleichgewichtskonstanten von Reaktionen zwischen einem Paar von wechselwirkenden oder chemisch reagierenden Molekülen analysiert wird.

17. Verfahren nach einem der Ansprüche 11 bis 13, bei dem die Probe (12) zur Bewertung von Enzymaktivitäten analysiert wird.

18. Verfahren nach einem der Ansprüche 11 bis 13, bei dem Konformationsänderungen in Molekülen gemessen werden.

19. Vorrichtung nach Anspruch 6 oder Verfahren nach Anspruch 18, bei der bzw. dem die Moleküle Biomoleküle sind.

20. Vorrichtung nach einem der Ansprüche 1 bis 10 und 19 oder Verfahren nach einem der Ansprüche 11 bis 19, bei der bzw. dem der mikroanalytische Detektor (7) einen Biosensor umfasst.

21. Vorrichtung oder Verfahren nach Anspruch 20, bei der bzw. dem der Biosensor ein Wellenleiter-Biosensor ist.

22. Verfahren zur Bioerfassung, umfassend:
Bereitstellen einer Vorrichtung nach einem der Ansprüche 9 und 10,
Ansaugen einer ersten Luftblase (13) in die Vorrichtung,
Ansaugen einer Fluidprobe (12), die ein Analytmolekül umfasst, in die Vorrichtung,
Ansaugen einer zweiten Luftblase (17) in die Vorrichtung,
Aktivieren der Pumpe (11), so dass ein Zurück- und Vorströmen der Fluidprobe von dem ersten Mikrokanal (14) zu der Probenkammer (3) und in den zweiten Mikrokanal (16) und von dem zweiten Mikrokanal (16) zu der Probenkammer (3) und in den ersten Mikrokanal (14) verursacht wird, und
Erfassen eines Signals von dem mikroanalytischen Detektor (7), wobei
der mikroanalytische Detektor ein Biosensor (7) ist, mindestens ein Teil der Fluidprobe (12) mit dem Biosensor (7) in Kontakt ist und mindestens ein Teil des ersten und des zweiten Mikrokanals (14, 16) mindestens einen Teil der Fluidprobe enthält.

## Revendications

1. Dispositif de détection moléculaire comprenant :
une chambre d'échantillon (3);
un premier microcanal (14) en communication de fluide avec la chambre d'échantillon (3) ;
un second microcanal (16) en communication de fluide avec la chambre d'échantillon (3) ; et
au moins une pompe (11) pour faciliter le pompage d'un échantillon de fluide (12) depuis le premier microcanal (14) à travers la chambre d'échantillon (3) et dans le second microcanal (16) et depuis le second microcanal à travers la chambre d'échantillon et dans le premier microcanal ; dans lequel
au moins l'un parmi le premier microcanal (14), la chambre d'échantillon (3) et le second microcanal (16) a une largeur qui provoque un mélange moléculaire de l'échantillon par un écoulement laminaire au sein de l'échantillon de fluide lorsque l'échantillon de fluide se déplace à travers le au moins un microcanal et/ou chambre d'échantillon ; et
la chambre d'échantillon (3) comportant un détecteur microanalytique (7).

2. Dispositif selon la revendication 1, les microcanaux (14, 16) ayant une largeur d'environ 10 µm à environ 1 mm, de préférence d'environ 50 µm à environ 500 µm.

3. Dispositif selon la revendication 1 ou la revendication 2, la chambre d'échantillon (3) comportant un volume d'environ 1 nl à environ 10 µl, de préférence d'environ 10 nl à environ 100 nl.

4. Dispositif selon l'une quelconque des revendications précédentes, dans lequel le détecteur microanalytique (7) est conçu pour évaluer une vitesse de liaison de réactions entre des molécules sélectionnées parmi des paires de protéines, anticorps et antigènes, protéines et hydrates de carbone, protéines et peptides, protéines et acides nucléiques, paires d'acides nucléiques, et molécules et une surface.

5. Dispositif selon l'une quelconque des revendications 1 à 3, dans lequel le détecteur microanalytique (7) est conçu pour évaluer des constantes d'équilibre de réactions entre des molécules sélectionnées parmi des paires de protéines, anticorps et antigènes, protéines et hydrates de carbone, protéines et peptides, protéines et acides nucléiques, paires d'acides nucléiques, et molécules et une surface.

6. Dispositif selon l'une quelconque des revendications 1 à 3, dans lequel le détecteur microanalytique (7) est conçu pour évaluer des changements conformationnels de molécules.

7. Dispositif selon l'une quelconque des revendications 1 à 3, dans lequel le détecteur microanalytique (7) est conçu pour évaluer des constantes d'équilibre de réactions bimoléculaires entre une paire de molécules interagissant ou réagissant chimiquement.

8. Dispositif selon l'une quelconque des revendications précédentes, le dispositif étant capable d'évaluer une activité enzymatique.

9. Dispositif selon l'une quelconque des revendications précédentes, la pompe (11) comportant une pompe oscillante.

10. Dispositif selon la revendication 9, dans lequel la pompe oscillante (11) est une pompe-seringue.

11. Procédé de détection moléculaire comprenant les étapes consistant à :
pomper un échantillon de fluide (12) à analyser à travers un premier microcanal (14) et une chambre d'échantillon (3) dans un second microcanal (16), ladite chambre d'échantillon comportant un détecteur microanalytique (7),
inverser l'écoulement dudit échantillon de fluide (12) de sorte que l'échantillon de fluide s'écoule depuis le second microcanal (16) dans la chambre d'échantillon (3) et ensuite dans le premier microcanal (14), et détecter un signal provenant du détecteur (7), dans lequel
la chambre d'échantillon (3) est remplie en continu à l'aide d'une partie de l'échantillon de fluide (12),
au moins une partie à la fois du premier microcanal (14) et du second microcanal (16) contient continuellement une partie de l'échantillon de fluide (12), et
au moins l'un parmi le premier microcanal (14), la chambre d'échantillon (3) et le second microcanal (16) a une largeur qui provoque un mélange moléculaire par un écoulement laminaire au sein de l'échantillon de fluide (12) lorsque l'échantillon de fluide se déplace à travers le au moins un microcanal et/ou chambre d'échantillon.

12. Procédé selon la revendication 1, dans lequel l'échantillon de fluide (12) a un volume inférieur à environ 20 µl, de préférence d'environ 3 µl à environ 8 µl.

13. Procédé selon la revendication 11 ou la revendication 12, comportant de plus le remplacement de l'échantillon de fluide (12) par un tampon et la surveillance d'un signal provenant du détecteur (7).

14. Procédé selon l'une quelconque des revendications 11 à 13, dans lequel l'échantillon (12) est analysé pour évaluer des vitesses de liaison de réactions entre des molécules sélectionnées parmi le groupe constitué de paires de protéines, anticorps et antigènes, protéines et hydrates de carbone, protéines et peptides, protéines et acides nucléiques, paires d'acides nucléiques, et molécules et une surface.

15. Procédé selon l'une quelconque des revendications 11 à 13, dans lequel l'échantillon (12) est analysé pour évaluer des constantes d'équilibre de réactions entre des molécules sélectionnées parmi le groupe constitué de paires de protéines, anticorps et antigènes, protéines et hydrates de carbone, protéines et peptides, protéines et acides nucléiques, paires d'acides nucléiques, et molécules et une surface.

16. Procédé selon l'une quelconque des revendications 11 à 13, dans lequel l'échantillon (12) est analysé pour évaluer des constantes d'équilibre de réactions entre une paire de molécules interagissant ou réagissant chimiquement.

17. Procédé selon l'une quelconque des revendications 11 à 13, dans lequel l'échantillon (12) est analysé pour évaluer des activités enzymatiques.

18. Procédé selon l'une quelconque des revendications 11 à 13, dans lequel des changements conformationnels des molécules sont mesurés.

19. Dispositif selon la revendication 6 ou procédé selon la revendication 18, dans lequel lesdites molécules sont des biomolécules.

20. Dispositif selon l'une quelconque des revendications 1 à 10 et 19 ou procédé selon l'une quelconque des revendications 11 à 19, dans lequel le détecteur microanalytique (7) comporte un biocapteur.

21. Dispositif ou procédé selon la revendication 20, dans lequel le biocapteur est un biocapteur à guide d'onde.

22. Procédé de biodétection comprenant les étapes consistant à :
fournir un dispositif selon l'une quelconque des revendications 9 et 10 ;
aspirer une première bulle d'air (13) dans le dispositif ;
aspirer un échantillon de fluide (12) comportant une molécule d'analyte dans le dispositif ;
aspirer une seconde bulle d'air (17) dans le dispositif ;
activer la pompe (11) pour amener l'échantillon de fluide à s'écouler en va-et-vient depuis le premier microcanal (14) dans la chambre d'échantillon (3) et dans le second microcanal (16), et depuis le second microcanal (16) dans la chambre d'échantillon (3) et dans le premier microcanal (14) ; et
détecter un signal provenant du détecteur microanalytique (7) ; dans lequel
le détecteur microanalytique est un biocapteur (7), au moins une partie de l'échantillon de fluide (12) est en contact avec le biocapteur (7), et au moins une partie des premier et second microcanaux (14, 16) contient au moins une partie de l'échantillon de fluide.
